## Europäisches Patentamt

## European Patent Office

## Office européen des brevets

(11) Veröffentlichungsnummer: **0 295 414**

**A2**

(12) # EUROPÄISCHE PATENTANMELDUNG

(21) Anmeldenummer: 88107276.3

(22) Anmeldetag: 06.05.88

(51) Int. Cl.⁴: **B60K 28/16 , F02D 11/10**

(30) Priorität: 10.06.87 DE 3719323

(43) Veröffentlichungstag der Anmeldung:
21.12.88 Patentblatt 88/51

(84) Benannte Vertragsstaaten:
DE FR IT SE

(71) Anmelder: ROBERT BOSCH GMBH
Postfach 50
D-7000 Stuttgart 1(DE)

(72) Erfinder: Barth, Günter, Dipl.-Ing.
Tubizer Strasse 8
D-7015 Korntal-Münchingen 1(DE)
Erfinder: Stegmaier, Alwin
Breslauer Strasse 3
D-7141 Schwieberdingen(DE)
Erfinder: van Zanten, Anton, Dr. Dipl.-Ing.
Waldstrasse 15/2
D-7257 Ditzingen 4(DE)

(54) **Vorrichtung zur Betätigung der Drosselklappe einer Brennkraftmaschine.**

(57) Bei einer Vorrichtung zur Betätigung der Drosselklappe einer Brennkraftmaschine wird insbesondere zur Antriebsschlupfregelung (ASR) und Motorschleppmomentregelung (MSR) vorgeschlagen, eine im Verlauf des Gaspedal-Übertragungsgestänges angeordnete Trennstelle durch beidseitig einwirkende Federkräfte zu überwinden derart, daß im Normalfall die Drosselklappenverstellung der Fahrpedalposition entspricht, während bei Realisierung von ASR-Funktionen durch die Wirkung eines elektromagnetischen oder elektromotorischen Gliedes die Trennstelle geöffnet und die Position der Drosselklappe selbsttätig und unabhängig vom Willen der Bedienungsperson zur Reduzierung des Antriebsradschlupfes eingestellt wird.

Fig.1

## Vorrichtung zur Betätigung der Drosselklappe einer Brennkraftmaschine

### Stand der Technik

Die Erfindung geht aus von einer Vorrichtung zur Betätigung der Drosselklappe einer Brennkraftmaschine nach der Gattung des Hauptanspruchs. Eine bekannte Vorrichtung dieser Art umfaßt einen im Gestängeverlauf zwischen dem Gaspedal und der Drosselklappe, oder sonstigen die Beeinflussung der von einer Brennkraftmaschine abgegebenen Leistung ermöglichenden Komponenten, angeordneten Hydraulikzylinder, der im Normalfall der Drosselklappenbetätigung mitbewegt wird und eine Abweichung oder einen Wegunterschied zwischen der Stellbewegung am Gaspedal und der Verstellung der Drosselklappe dadurch ermöglicht, daß er selektiv entweder mit entsprechendem Druck eines Druckmittels beaufschlagt wird oder Druck abgelassen wird (DE-OS 33 23 563; US-PS 4 416 347). Solche Hydraulikzylinder sind üblicherweise ergänzend vorgesehen bei Anlagen mit Antiblockiersystemen (ABS) und resultieren aus einer Erweiterung der Grundfunktion solcher Blockierschutzsysteme, in dem entsprechende Bremskraftmodulationen durch Beaufschlagung der Radbremszylinder oder diesen vorgeschaltete Systeme nicht nur dann vorgenommen werden, wenn bei Bremsungen die Räder des jeweiligen Kraftfahrzeugs blockieren, sondern beim Gasgeben, etwa bei heftigem Anfahren, aber auch bei normalem Anfahren auf glattem Untergrund, durchzudrehen drohen. Man kann dann die von den ohnehin vorhandenen Radsensoren gelieferten Signale auch für eine solche Antriebsschlupfregelung (ASR) ausnutzen, wobei dann noch Signale vom Brems- bzw. Fahrpedal (Gaspedal) einzubeziehen wären.

Dabei ist eine AsR-Regelung nicht nur durch das Ausüben einer Bremswirkung an durchdrehenden Rädern möglich, sondern auch durch Reduzierung der von der Brennkraftmaschine abgegebenen Motorleistung, also dadurch, daß man unabhängig vom Willen der das Fahr- oder Gaspedal bedienenden Person und unabhängig von der tatsächlichen Position des Fahrpedals die Drosselklappenstellung zurücknimmt und hierdurch die Neigung zum Durchdrehen der Antriebsräder mildert.

Die Zwischenschaltung solcher druckabhängigen, vom Gestänge primär mitbewegten Hydraulikzylinder im Verbindungsgestänge zwischen Gaspedal und Drosselklappenbetätigung kann kompliziert und umständlich sein, da jedenfalls mindestens ein Druckanschluß vorhanden sein muß und außerdem ein umgekehrter Betätigungsablauf durch die Schaltsysteme, also mehr oder weniger starkes Gasgeben in bestimmten Fällen, wenn das Fahrpedal sich in der Leerlaufstellung befindet, nicht möglich ist.

Der Erfindung liegt daher die Aufgabe zugrunde, einen ohne die Notwendigkeit hydraulischer oder pneumatischer Druckanschlüsse verwendbaren Drosselklappensteller zu schaffen, der unmittelbar von elektrischen Signalen ansteuerbar ist, im Normalfall eine Trennstelle im Verlauf der Drosselklappenbetätigung überbrückt und auch noch erweiterten Ansteuerfunktionen, also sowohl einem vom Willen der Benutzungsperson unabhängigen stärkeren Öffnen der Drosselklappe, als auch einem Schließen der Drosselklappe zugänglich ist.

### Vorteile der Erfindung

Die erfindungsgemäße Vorrichtung löst diese Aufgabe mit den kennzeichnenden Merkmalen des Hauptanspruchs und hat den Vorteil, daß sich eine einfache Bauweise bei robustem Aufbau ergibt und eine Drosselklappenmodulation möglich ist ohne die Notwendigkeit der Erzeugung eines hydraulischen oder pneumatischen Stellmitteldrucks, unmittelbar abgeleitet aus elektrischen Stellsignalen, die einer elektromagnetischen (Linearsteller) oder elektromotorischen (rotatorischer Drosselklappensteller) Antriebseinheit zugeführt werden.

Infolge der kompakten Abmessungen ist ein Einbau des der Erfindung zugrundeliegenden Drosselklappenstellers für die Realisierung von ASR-Funktionen und/oder MSR-Funktionen (Motorschleppmomentregelung) an beliebiger Stelle zwischen Fahrpedal und Drosselklappe möglich, wobei die Entkopplung vom Fahrbefehl und die unabhängige Drosselklappenreduzierung im ASR-Fall bzw. Drosselklappenöffnung im MSR-Fall spontan und jederzeit einsetzbar möglich ist.

Durch die in den Unteransprüchen aufgeführten Maßnahmen sind vorteilhafte Weiterbildungen und Verbesserungen der im Hauptanspruch angegebenen Vorrichtung möglich. Bei Ausbildung des Drosselklappenstellers als elektromagnetisches Betätigungsglied, also im einfachsten Fall bestehend aus einem im Magnetfeld einer Erregerspule beweglich gelagerten Anker kann die Trennstelle so definiert sein, daß auf den Anker, der in geeigneter Weise (Gestänge, Seilzug) mit der Drosselklappenbetätigung verbunden ist, eine in Öffnungsrichtung der Drosselklappe wirkende Vorspannungsfeder (Öffnungsfeder) einwirkt und die Trennstelle realisiert ist durch ein am Anker anliegendes Gestängeteil aus dem Bereich der Fahrpedalbetätigung, wobei das Anliegen der beiden Teile durch eine weitere Feder gesichert ist, die das Gestängeteil gegen den Anker drückt und hierbei im übrigen auch die Kraft der Drosselklappen-Öffnungsfeder überwindet, damit im Ausgangszustand die Drosselklappe geschlossen ist. Ferner gehört zu dem Zusammenspiel dieser beiden Federn noch eine weitere, üblicherweise unmittelbar an einem Hebel zur Drosselklappenverstellung angreifende Drosselklappenfeder, die ebenfalls die Wirkung hat, die Drosselklappe in ihre Schließposition zu überführen.

Die einwirkenden Federkräfte überwinden daher die Trennstelle bei jeder Fahrpedalposition kraftschlüssig.

Durch entsprechende Ansteuerung des elektromagnetischen Gliedes ist es aber bei jeder Fahrpedalposition aus der Leerlaufstellung heraus möglich, die Trennstelle zu öffnen und die Drosselklappe in eine mehr oder weniger geschlossene Position zu überführen. Bevorzugt ist der Anker des elektro magnetischen Stellglieds als Permanentmagnet ausgebildet, so daß sich ein linearer Kraftanstieg oder -abfall bei Erhöhen oder Reduzieren des Spulenstroms ergibt. Dieser Spulenstrom wird von einer logischen Steuerschaltung o. dgl. erzeugt, die auf ihr zugeführte Stellsignale reagiert, die teilweise unter Ausnutzung der bei einer ABS-Regelung ohnehin vorhandenen Sensoren erstellt werden können. Es wird dann so auf den Permanentmagnet/Anker eingewirkt, daß dieser von seiner Gegenkomponente im Trennstellenbereich abhebt und die dann vom Willen des Fahrers unabhängige Verstellung der Drosselklappenposition bewirkt. Daher wirken nach dem Trennen des Ankers von seiner vom Federteller einer Zugstange gebildeten Gegenkomponente der Anker, die Erregerspule, in dessen Feld sich der Anker befindet, und die bei dieser Verstellung beteiligten, dann restlichen Federn (Öffnungsfeder und Drosselklappenrückführfeder) als stromproportionaler Weg-/Winkelsteller für die Drosselklappe.

Es gibt zwei besondere Vorteile dieser Anordnung. Der erste Vorteil ist, daß der Fahrer bei ASR-Betrieb die Regelung nicht durch eigene Änderung der Fahrpedalstellung stören kann. Wenn diese Änderung der Fahrpedalstellung in Richtung "mehr Gas" verläuft, dann gibt es keine Rückwirkung auf die ASR-Regelung. Wenn dagegen die Änderung der Fahrpedalstellung in Richtung "weniger Gas" ist, dann wird der Fahrerwunsch respektiert, wenn die Gaspedalstellung unterhalb der der ASR-Stellung liegt, d.h. daß die Räder bei dieser Gaspedalstellung nicht mehr durchdrehen. Wenn dagegen die Gaspedalstellung 16.2.1987 - 6 nicht unterhalb der der ASR-Stellung liegt, dann wird die ASR-Regelung von der Gaspedalbewegung nicht beeinflußt.

Der zweite Vorteil ist, daß der Fahrer durch den Eingriff des Drosselklappenstellers wegen der sich ändernden Kraft an dem Fahrpedal die Information bekommt, daß er zuviel Gas gegeben hat. Durch diese Kraftänderung wird der Fahrerfuß zurückgedrückt in Richtung Gasminderung.

Bei einem weiteren Ausführungsbeispiel erfolgt die Öffnung der Trennstelle durch einen rotatorischen Drosselklappensteller, der an einem mit dem Drosselklappengestänge verbundenen Hebel angreift, der über eine Nockenanlage auch mit einem anderen Hebel zusammenwirken kann und gegen diesen durch beiderseitig einwirkende Federkräfte vorgespannt ist. Der andere Hebel erfährt seine Betätigung, die einer Verdrehung entspricht, vom Bereich der Fahrpedalverstellung. Da die nockenartigen, die beiden Hebel verbindenden Vorsprünge nur in einer Drehrichtung eine formschlüssige Anlage bilden, kann sich der mit dem Drosselklappengestänge verbundene Hebel unter der Einwirkung eines motorischen Drehstellers (rotatorischer Steller) von dem ersten Hebel abheben und die gewünschte Drosselklappenreduzierung (ASR-Funktion) bewirken. Eine MSR-Funktion bedeutet hingegen ein Öffnen der Drosselklappen (DK) entgegen der Vorgabe des Fahrers, wobei der Permanentmagnet am Gestängeteil (Federteller) anliegt (keine Entkopplung).

Schließlich ist es möglich, bei der vom Willen des Fahrzeugbenutzers unabhängigen Betätigung zum Öffnen bei MSR oder Schließen bei ASR der Drosselklappe auch eine weiche Summen-Federkennlinie aus der Öffnungsfeder und der Drosselklappenfeder zu realisieren, indem der Öffnungsfeder die Wirkung einer negativen Federkennlinie verliehen wird. Dies kann dadurch geschehen, daß man beim rotatorischen Steller eine Kurvenscheibe mit unterschiedlichen Betätigungsradien zugrundelegt, an welcher die Öffnungsfeder mit normaler Federcharakteristik angreift. Zur Erzielung einer negativen Federkennlinie kann auch ein magnetischer Kraftspeicher eingesetzt werden. Durch eine solche weiche Summenfederkennlinie wird der sonst unvermeidlichen Versteilerung der Federgesamtcharakteristik auf der Drosselklappenseite der Trennstelle entgegengewirkt, so daß auch mit einer kleineren Schließfeder im Bereich der Fahrpedalbetätigung gearbeitet werden kann. Ferner braucht die von dem linearen oder rotatorischen Steller aufgebrachte Kraft nicht mit dem Stellerweg anzusteigen.

Zeichnung

Ausführungsbeispiele der Erfindung sind in der Zeichnung dargestellt und werden in der nachfolgenden Beschreibung näher erläutert. Es zeigen:

Fig. 1 schematisiert den Grundaufbau eines Linear-Drossel klappenstellers, angeordnet zwischen dem ebenfalls schematisch dargestellten Fahrpedal und dem die Drosselklappe enthaltenden Teil des Ansaugrohrs einer Brennkraftmaschine und

Fig. la schematisiert das elektrische oder elektronische Steuergerät zur Beaufschlagung des elektromagnetischen Stellglieds des Drosselklappenstellers;

Fig. 2 den Federkennlinienverlauf als Federkraft über Auslenkung (Weg s) einer Drosselklappen-Rückstellfeder;

Fig. 3 den Federkennlinienverlauf einer auf die Position des Permanentmagneten im Drosselklappensteller einwirkenden Druckfeder;

Fig. 4 die Summe der Federkräfte der Drosselklappen-Rückstellfeder und der Druckfeder über der Auslenkung;

Fig. 5 den Federkraftverlauf einer Fahrpedal-Rückstellfeder und

Fig. 6 ebenfalls in Form eines Diagramms, die Summe der insgesamt auf die Position der Elemente des Drosselklappenstellers und letztlich der Position der Drosselklappe einwirkenden Federn;

Fig. 7 schematisiert den Grundaufbau eines weiteren Ausführungsbeispiels vorliegender Erfindung bei einem rotatorischen Steller zur Drosselklappenbetätigung, der ebenfalls zwischen dem Fahrpedal und der Drosselklappe unter Bildung eines Stellers angeordnet ist;

Fig. 8 in größerem Detail die Ausführungsform eines rotatorischen Stellers mit einander zugeordneten und über Nocken gekoppelten Hebeln für eine Gestängeverstellung und

Fig. 9 lediglich im Ausschnitt anstelle der Hebelbetätigung die Kopplung der Trennstelle über nockenge koppelte Kurvenscheiben, die sich für eine Zugseilverstellung eignen,

Fig. 10 den Verlauf von Federkennlinien von Drosselklappenfeder und Öffnungsfeder in Form eines Diagramms und

Fig. 11 von Federkennlinien von Drosselklappenfeder, realer Öffnungsfeder und gewünschter Öffnungsfeder (negativer Kennlinienverlauf) zur Erzielung einer weichen Summenfederkennlinie;

Fig. 12 die Grundform der Anlenkung einer realen Öffnungsfeder über eine Kurvenscheibe enthaltende Übertragungsmittel, so daß sich insgesamt die Wirkung einer negativen Federkennlinie ergibt;

Fig. 13 die an der Kurvenscheibe und an einer mit ihr gekoppelten weiteren Übertragungsscheibe angreifenden Kräfte für die Leerlauf-Drosselklappenstellung;

Fig. 14 den Kennlinienverlauf der eingesetzten realen Öffnungsfeder bei Realisierung einer insgesamt negativen Federkennlinie;

Fig. 15 schematisiert veränderliche Radien der Kurvenscheibe, mit deren Hilfe der negative Federkennlinienverlauf erzielt wird;

Fig. 16 den Verlauf von Federkennlinien der Drosselklappenfeder, einer realen Öffnungsfeder und einer gewünschten Öffnungsfeder bei einer von einem magnetischen Kraftspeicher herrührenden, in Richtung Öffnen der Drosselklappe wirkenden Magnetkraft und

Fig. 17 schematisiert ein Ausführungsbeispiel eines Linearstellers mit einer insgesamt weichen Summenfederkennlinie zum Öffnen der Drosselklappe, bei dem ein solcher magnetischer Kraftspeicher verwendet ist.

Beschreibung der Ausführungsbeispiele

Der Grundgedanke vorliegender Erfindung besteht darin, die Verbindung zwischen dem Fahrpedal und der Drosselklappe an geeigneter Stelle aufzutrennen, also eine Trennstelle zu legen, diese durch einwirkende Federkräfte und Magnetkräfte zu überbrücken, also kraftschlüssig zu schließen, jedoch Mittel vorzusehen, die in der Lage sind, den so erzeugten Kraftschluß im Gestängeverlauf wieder aufzuheben und daher willkürliche Drosselklappen-Stellbewegungen zu realisieren, abhängig von zugeführten elektrischen Signalen und unabhängig vom Willen der Bedienungsperson, also von der Stellung des Fahrpedals. Entsprechende Antriebsmittel können z.B. ein Linearsteller oder ein rotatorischer Steller sein.

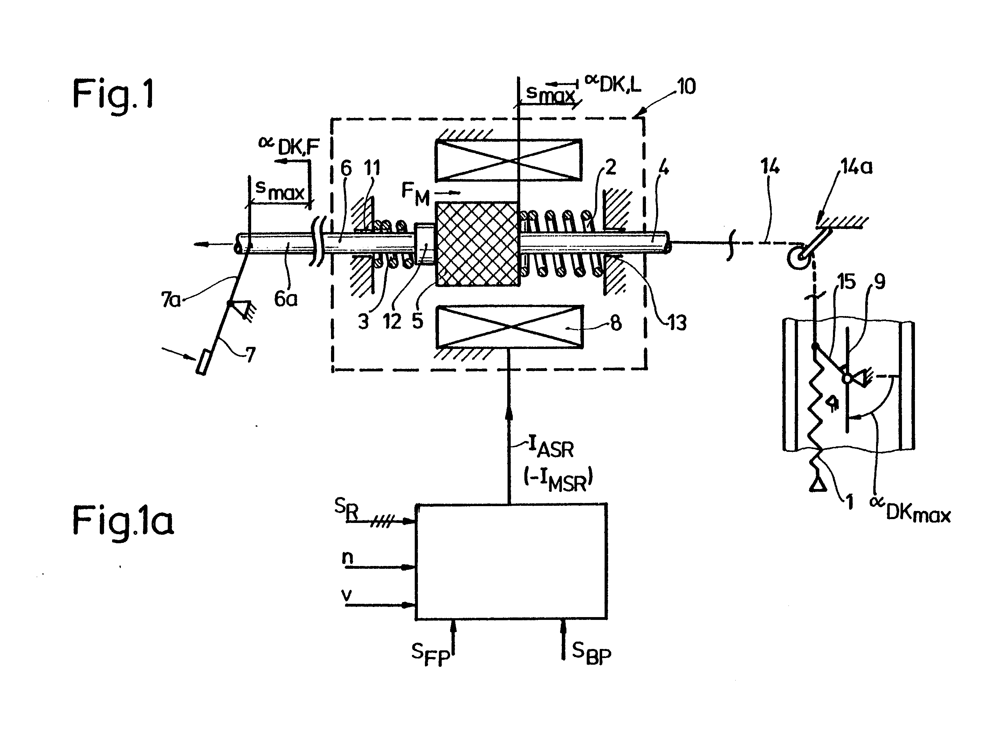

Ein solcher linearer Drosselklappensteller ist als Trenn-und elektromagnetisches Betätigungsglied ausgebildet und in der Darstellung der Fig. 1 mit 10 bezeichnet und durch die gestrichelte Umrandung angegeben. Der lineare Drosselklappensteller 10 kann an beliebiger Stelle zwischen dem Betätigungsbereich des Fahrpedals liegen und einem der Drosselklappe 9 zugeordneten Gestänge angeordnet sein und umfaßt als Gegenkomponente zu einem Anker in der bevorzugten Form als Permanentmagnet 5 eine in einer Gleitführung 11 gelagerte Zugstange 6, die auch unmittelbar Teil der am Fahrpedalgestänge 7a angelenkten Zugstange 6a sein kann.

In der Zeichnung der Fig. 1 sind die Teile in der maximalen Auslenkung (Vollgas-Stellung des Fahrpedals) dargestellt, in welcher auch der größte Öffnungswinkel $\alpha_{DKmax}$ vorliegt, entsprechend der maximalen Wegauslenkung $s_{max}$ der Drosselklappensteller-Komponenten.

Die Gegenkomponente 6 zum Permanentmagneten 5 umfaßt einen unmittelbar mit dem Permanentmagneten 5 in Wirkverbindung stehenden, also an diesem anliegenden Federteller 12. Eine Fahrpedal-Rückstellfeder 3 wirkt auf die Gegenkomponente 6 ein, die, wie schon erwähnt, auch Teil der Fahrpedal-Zugstange 6a unmittelbar sein kann.

Der Permanentmagnet 5 befindet sich im Einflußbereich einer elektromagnetischen Spule 8 und bildet so mit dieser ein elektromagnetisches Stellglied mit der Tendenz, daß der Permanentmagnet 5 bei maximalem Spulenstrom so weit in die Spule 8 hineingezogen werden kann, daß die Drosselklappe sich in Leerlaufstellung befindet, wobei diese eine Magnetkraft $F_M$ erzeugt. Am Permanentmagneten 5 ist das Ausgangsstellglied des linearen Drosselklappenstellers 10 angeordnet und ebenfalls wieder als Zugstange 4 dargestellt, die in einer Gleitlagerung 13 geführt ist. Auf den Permanentmagneten wirkt eine Druckfeder 2 ein, die die Tendenz hat, den Permanentmagneten 5 im ASR-Fall in Gegenrichtung zur von der Spule auf ihn einwirkenden Magnetkraft $F_M$, d.h. in Richtung Drosselklappe offen zu verschieben, also in Anlage an den Federteller 12 der Gegenkompnente 6 zu halten. Dies gilt für den ASR-Fall, in welchem die Magnetkraft $F_M$ diese Richtung hat. Im MSR-Fall wirkt die Magnetkraft entgegengesetzt, also mit der Druckfeder 2. Der Ausgang der Zugstange 4 kann dann in beliebiger Weise mit einer Möglichkeit zur Drosselklappenverstellung verbunden sein; bei dem dargestellten Ausführungsbeispiel ist schematisiert ein Zugseil 14 angedeutet, welches an einem mit der Drosselklappe 9 verbundenen Hebel 15 angreift, wobei am Hebelende gleichzeitig in Gegenrichtung eine Zugfeder 1 angelenkt ist, die die Tendenz hat, die Drosselklappe 9 in ihre Ausgangsposition (geschlossen, Brennkraftmaschine im Leerlauf) zurückzuführen. Bei 14a ist noch eine Umlenkmöglichkeit für den Zugseilverlauf dargestellt, so daß die so gebildeten Verbindungen der jeweiligen Komponenten sinngemäß zutreffend sind und die Grundfunktion des Drosselklappenstellers erkennbar wird.

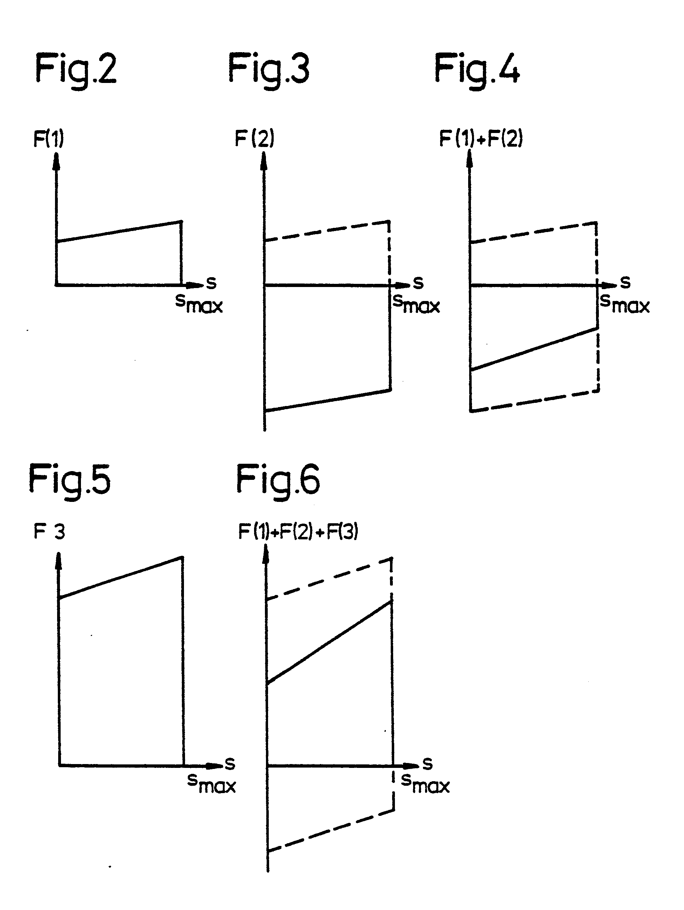

Im folgenden werden jetzt zunächst anhand der Diagrammdarstellungen der Fig. 2 bis 6 die jeweiligen Federwirkungen auf die Komponenten des Drosselklappenstellers betrachtet.

Dabei ist die Federkraftcharakteristik F(1) der Drosselklappen-Rückstell- oder -Zugfeder 1 im Diagramm der Fig. 2 dargestellt, wobei die Federkraft mit zunehmender Auslenkung bis zum Drosselklappenwinkel $\alpha_{DK} = 90°$ nur geringfügig ansteigt.

Die Fig. 3 zeigt in Form eines ähnlichen Diagramms den in diesem Fall entgegengerichteten Federkraftverlauf F(2) der Druckfeder 2, die entgegen der Drosselklappen-Rückstellfeder auf den Permanentmagneten 5 einwirkt, wobei dann die Darstellung der Fig. 4 die Summenwirkung der Federkräfte F(2) + F(1) darstellt. Man erkennt, daß, diese beiden Federkräfte allein betrachtet, die Kraft der Druckfeder 2 überwiegt und hierdurch die Drosselklappe 9 in ihre Offenstellung gezogen wird.

Die Fig. 5 zeigt jetzt den Diagrammverlauf der Federkraft F(3) der Fahrpedal-Rückstellfeder 3, die vergleichsweise kräftig ist, so daß die in Fig. 6 gezeigte Summenbildung der Federkräfte F(3) + F(2) + F(1) eine hier in Schließrichtung auf die Drosselklappe 9 einwirkende Gesamtfederkraft darstellt (positive Wirkung), wobei auch gleich erkennbar wird, daß durch die Wirkung dieser Federkräfte die zwischen dem Permanentmagneten 5 und dem Federteller 12 der Zugstangen-Verlängerung 6 bestehende Trennstelle (die se beiden Komponenten sind nicht miteinander verbunden, sondern liegen lediglich aneinander an) im Sinne einer Überbrückung verbunden und diese beiden Teile kraftschlüssig aneinandergedrückt werden. Der Diagrammverlauf der Fig. 6 durchtritt an keiner Stelle die Federkraft-Nullinie (Abszisse), so daß in jeder Betätigungsstellung des Fahrpedals 7 von Auslenkung Null bis Auslenkung $s_{max}$ die beiden Teile 5 und 12 aneinanderliegen und daher also im Normalfall eine unbeeinflußte Drosselklappen-Stellbewegung möglich ist.

Die Wirkungsweise des in seinem grundsätzlichen Aufbau beschriebenen Drosselklappenstellers ist jetzt so, daß sich mit diesem ein Drosselklappenwinkel $\alpha_{DKL}$ einstellen läßt, der kleiner oder gleich dem vom Fahrer vorgegebenen Drosselklappenwinkel $\alpha_{DKF}$ ist. Dabei entspricht die in der Zeichnung dargestellte maximale Auslenkung der Drosselklappenkomponenten, die über Gestänge, Bowdenzüge oder sonstige Verbindungsmittel mit Fahrpedal und Drosselklappe verbunden sein können, einem Drosselklappenwinkel $\alpha_{DK} = 90°$. Die Rückstellkraft der in diesem Fall voll ausgelenkten Drosselklappenfeder 1 wirkt über die Verbindung 14 und 4 auf den Permanentmagneten 5, auf den auch die Kraft der Druckfeder 2 einwirkt.

An sich können die auf das Gesamtsystem einwirkenden Federn in beliebiger Weise und in beliebiger Anlenkung an die Komponenten ausgebildet sein, jedoch mit der Maßgabe, daß ohne Druck auf das Fahrpedal 7 und ohne Krafteinwirkung auf den Permanentmagneten die Drosselklappe unter Federwirkung geschlossen ist und die Teile 5 und 12 aneinander anliegen.

Ergibt sich eine ASR-Funktion (Antriebsschlußregelung), dann soll eine Drosselklappenstellung eingestellt werden, die kleiner als die vom Fahrer vorgegebene Drosselklappenstellung ist. Dies wird durch einen entsprechend bemessenen elektrischen Strom in der Spule 8 erreicht, wodurch der Permanentmagnet eine zusätzliche Kraft $F_M$ in das System der Federn 1, 2 und 3 einleitet. Ein Ablösen des Permanentmagneten 5 von den Komponenten 6a, 6, 12 erfolgt dann, wenn die durch die Spule 8 erzeugte Magnetkraft $F_M$ größer als die von der Drosselklappenstellung abhängende Summe der Federkräfte F(2) und F(1) - die Anpreßkraft - ist. Bei Ablösun bleibt die Kraft der Feder 3 unberücksichtigt, da diese ohnehin durch das niedergedrückte Fahrpedal 7 zurückgehalten und daher egalisiert ist. Dabei ergibt sich nach Ablösen des Permanentmagneten 5 letztlich von der Zugstange 6a des Fahrpedals 7 eine eindeutige Zuordnung zwischen der erzeugten Magnetkraft $F_M$, mit anderen Worten, zwischen dem durch die Spule 8 fließenden Strom und dem Drosselklappenwinkel $\alpha_{DK}$ Dieser Strom $I_{ASR}$ kann daher geregelt werden und das entsprechende zugeordnete elektrische oder elektronische Steuersystem, welches in Fig. 1a dargestellt und mit 16 bezeichnet ist, kennt daher - abgesehen von Festreibung - die durch den Strom erzeugte Drosselklappenauslenkung und kann diese auch auf entsprechende Werte begrenzen.

Wird daher der Spule 8 der Strom $I_{ASR}$ für die Antriebsschlupfregelung in einer vorgegebenen Richtung zugeführt, dann kann durch die hierdurch erzeugte Magnetkraft $F_M$ die Drosselklappe nur in Schließrichtung bewegt, also weiter geschlossen werden, bezogen auf die vom Fahrer vorgegebene Position (ASR-Funktion).

Andererseits kann, wenn das Fahrpedal vom Fahrer nicht betätigt wird oder im Übergang in die Leerlaufstellung, der Brennkraftmaschine (- schlagartig) zurückgenommen wird, eine sogenannte MSR-Funktion durch eine Magnetkraft in der zu dem obigen Fall entgegengesetzten Richtung (also - $F_M$) realisiert werden. In diesem Fall ergibt sich bei gewünschtem Drosselklappenwinkel die durch die Magnetkraft (- $F_M$) zu überwindende Federkraft aus der Summenkennlinie der drei Federn 1, 2 und 3 entsprechend Kennlinienverlauf der Fig. 6. Eine solche MSR-Regelung ist als Regelung des Motorschleppmoments im Sinne einer Begrenzung oder Verminderung des vom Motor erzeugten Schleppmoments zu verstehen und beispielsweise auf den Anwendungsfall gerichtet, wenn bei in die Leerlaufstellung zurückgenommenem Fahrpedal der Motor von den Rädern (beim Abbremsen eines Fahrzeugs) angetrieben, also "geschleppt" wird, bis die Drehzahl der Getriebeeingangswelle auf die eigentliche Motorleerlaufdrehzahl abgesunken ist. Eine solche Motorschleppmomentregelung ist sinnvoll, wenn auf glatter Fahrbahn mit eingekuppeltem Motor gebremst wird, da in einem solchen Fall an den mit dem Motor verbundenen Antriebsrädern ein Schlupf auftritt, was gegebenenfalls auch schon beim Gaswegnehmen auf Glatteis der Fall ist. Um einen solchen Schlupf zu verhüten, wirkt eine Motorschleppmomentregelung (MSR) im Sinne eines (behutsamen) Gasgebens, versucht also die Drosselklappe zu öffnen und daher ist auch die für eine MsR-Funktion von der Spule 8 zu erzeugende Magnetkraft entgegengesetzt der für die Realisierung von ASR-Funktionen erzeugten Magnetkraft. Eine solche umgekehrte Magnetkraft läßt sich durch einen in entgegengesetzter Richtung durch die Spule 8 fließenden Strom erzeugen. Für bestimmte Regelungsaufgaben im Zusammenhang mit den genannten ASR- und MSR-Funktionen kann die Kenntnis der Drosselklappenstellung von Bedeutung sein und läßt sich diese nicht aus dem durch die Spule 8 fließenden Strom ableiten, beispielsweise wenn bei Betätigung des Gaspedals der Permanentmagnet 5 nicht von der Zugstange 6a oder den mit ihr verbundenen Komponenten abgehoben hat, dann kann die Drosselklappenstellung auf andere Weise, beispielsweise aus der Stellung des Permanentmagneten 5 bestimmt werden. Es wird darauf aufmerksam gemacht, daß die den Steuerstrom $I_{ASR}$ oder - $I_{MSR}$ für das elektromagnetische Glied im Drosselklappensteller erzeugende elektrische oder elektronische Logik- oder Steuerschaltung 16 von beliebigem Aufbau sein kann; als Eingangssignale werden unter anderem benötigt von Radsensoren stammende Signale $S_R$ (wie bei der ABS-Regelung), Drehzahl- und Fahrgeschwindigkeitssignale n bzw. v sowie zur Unterscheidung zwischen einer Betätigung der Bremse oder des Fahrpedals des Kraftfahrzeugs Bremspedal- bzw. Fahrpedal-Stellungssignale $S_{BP}$ bzw. $S_{FP}$, die auch einfache Brems- oder Fahrpedal-Schaltsignale sein können. Die elektronische Logikschaltung 16 arbeitet dabei wie im Sinne einer ABS-Regelung und daher unter Zugrundelegung der gleichen elektrischen oder elektronischen Regelkomponenten wie bei den bekannten, eingangs genannten Systemen, so daß hierauf nicht genauer eingegangen zu werden braucht. Es versteht sich aber, daß die einzelnen Bausteine und Blöcke in analoger, digitaler oder auch hybrider Technik aufgebaut sein können oder vorzugsweise auch ganz oder teilweise zusammengefaßt, entsprechende Bereiche von programmgesteuerten digitalen Systemen, beispielsweise bei Mikroprozessoren oder Mikrorechnern sein können. Die Steuerschaltung 16 erzeugt jedenfalls einen solchen Strom für eine ASR-Funktion, daß die von den Sensoren ge messene und als Radumdrehungssignale $S_R$ zugeführten Schlupfwerte der Antriebsräder zurückgenommen werden. Sobald dies festgestellt ist, wird der Strom $I_{ASR}$ durch die Spule 8 wieder abgebaut. Das gleiche gilt sinngemäß für die Realisierung von MSR-Funktionen, wo lediglich durch Zuführung eines Stroms - $I_{MSR}$, also in negativer Richtung, soweit behutsam Gas gegeben wird, daß negative Auswirkungen des Motorschleppmoments auf eine Schlupfbildung an den Antriebsrädern vermieden wird.

Betraf das soeben erläuterte Ausführungsbeispiel einen linearen Drosselklappensteller (Linearsteller), so beziehen sich die folgenden Ausführungsbeispiele auf Ausführungsformen von rotatorischen Drosselklappenstellern (Schwenkstellern) für die Realisierung von ASR- und MSR-Funktionen, da das der Erfindung zugrundeliegende Prinzip, mit einer Öffnungsfeder 2, die eine Kraftwirkung in Richtung auf ein Öffnen der Drosselklappe entwickelt, und einer Schließfeder 3 eine Stelle im Verlauf der Drosselklappenbetätigung vom Fahrpedal mit Entkopplungsmöglichkeiten zu schaffen, nicht nur durch einen Linearsteller, sondern auch durch einen rotatorischen Steller realisiert werden kann.

Auch in den folgenden Ausführungsbeispielen sind identisch gleiche Teile mit gleichen Funktionen mit den gleichen Bezugszeichen versehen, während gleich wirkende Komponenten ein mit einem Beistrich oben versehenes Bezugszeichen aufweisen.

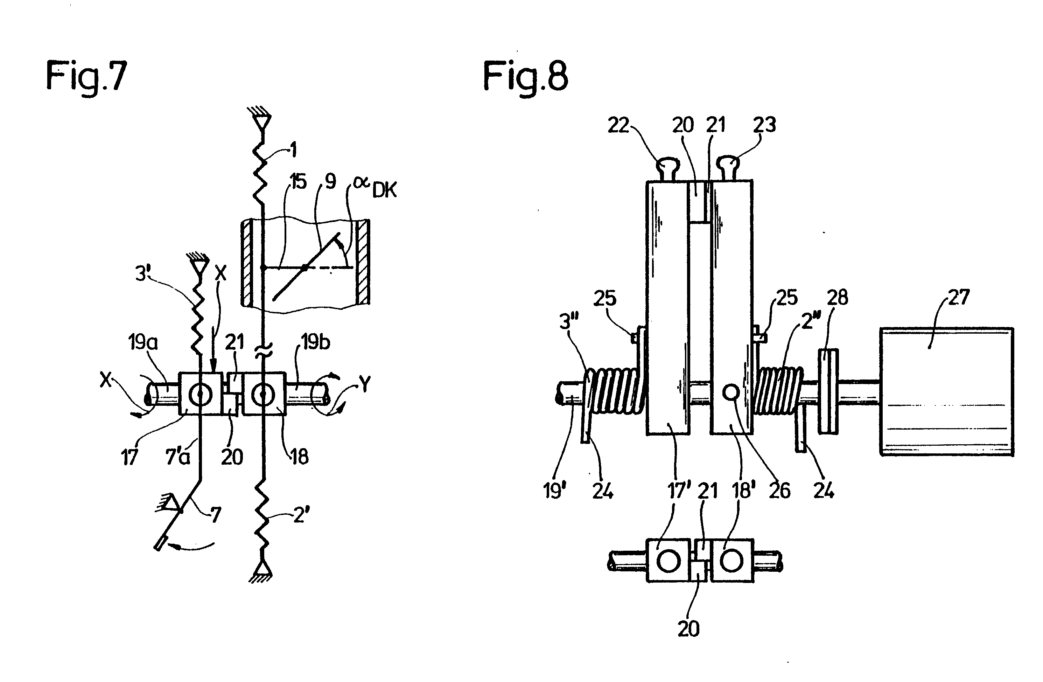

Die Fig. 7 zeigt die Grundform eines rotatorischen Drosselklappenstellers, bei dem zwei Hebel 17 und 18 von einer, ge gebenenfalls auch von zwei unabhängig zueinander verdrehbaren, dann zweckmäßigerweise gleichachsigen Wellen 19a, 19b verdrehbar- oder verschwenkbar gelagert sind. Durch aufeinanderzu gerichtete, sich überlappende Vorsprünge 20, 21, am besten an den Hebelenden ist die Trennstelle (Entkopplungsmöglichkeit) gebildet, da der eine Hebel 17 vom Fahrpedal 7 angetrieben ist, beispielsweise über eine Zugseilverbindung oder ein Gestänge 7a', wie in Fig. 7 dargestellt oder auch durch Übertragung einer entsprechenden Drehbewegung auf die ihn lagernde Achse 19a, an der er dann festgemacht ist. In Gegenrichtung arbeitet wie üblich die eine Kraftwirkung in Richtung Schließen der Drosselklappe aufbringende, ebenfalls auf den Hebel 17 einwirkende Schließfeder 3'.

Der grundsätzliche Aufbau vervollständigt sich durch die am Hebel 18 angreifende, in Öffnungsrichtung der Drosselklappe eine Kraftwirkung entfaltende Öffnungsfeder 2' und die in dieser Form auch beim Linearsteller der Fig. 1 vorhandene Drosselklappen-Rückstellfeder 1 - sämtliche Federn 1, 2' und 3' sind Zugfedern mit Federcharakteristiken, auf die weiter unten noch genauer eingegangen wird, die aber im Prinzip so wie beim Linearsteller der Fig. 1 wirken, d.h. die Öffnungsfeder 2' überwindet in jeder Drosselklappenposition die Kraft der Drosselklappenrückstellfeder 1 und sorgt dafür, daß der Vorsprung 21 stets am Vorsprung 20 anliegt. Eine Betätigung des Fahrpedals 7 bewirkt dann eine Verschwenkung des Hebels 17 in Pfeilrichtung X bzw. eine Teilverdrehung entsprechend dem Pfeil X', wenn die Fahrpedalbewegung an der Achse 19a angreift; die Kraft der Schließfeder 3' wird hierdurch aufgehoben und die Öffnungsfeder 2' sorgt dafür, daß der He bel 18 im Normalfall der Schwenkbewegung des Hebels 17 nachläuft, der Nocken oder Vorsprung 21 daher am Nocken oder Vorsprung 20 anliegt.

Ergibt sich die Notwendigkeit einer ASR-Funktion oder MSR-Funktion, dann wird der Hebel 18 unabhängig zur Position des Hebels 17 angetrieben, beispielsweise bei festem Sitz des Hebels 18 auf der Welle 19b, in dem an dieser ein rotatorischer Drosselklappensteller je nach gewünschter Funktion in der einen oder anderen Richtung des Doppelpfeils Y eine Verdrehung bewirkt.

Fig. 8 zeigt ein detaillierteres Ausführungsbeispiel für eine Drosselklappenmodulation bei ASR- oder MSR mit rotatorischem Steller, vorzugsweise zur Anwendung bei Fahrzeugen, deren Drosselklappe mit einem Gestänge betätigt wird. Das zum Fahrpedal führende Gestänge ist dann am Hebel 17', vorzugsweise an einem am Hebelende angeordneten, pilzförmigem Ansatz 22 angelenkt, während das zur Drosselklappe führende Gestänge an einem gleichen Ansatz 23 am Hebel 18' angelenkt ist. Die die Nocken oder Vorsprünge 20, 21 in Anlage haltenden Schließ- bzw. Öffnungsfedern 2'' und 3'' können mit Vorteil, wie in Fig. 8 gezeigt, auch als Drehfedern ausgebildet sein; sie stützen sich dann einerseits mit ihren ersten endseitigen Fortsätzen 24 am Gehäuse des Stellers ab und wirken gegensinnig mit ihren anderen endseitigen Fortsätzen auf die Hebel 17', 18', wobei sie an Anschlägen 25 der Hebel anliegen.

Bei dem dargestellten Ausführungsbeispiel kann vorteilhaft sein, daß der Hebel 17' lose auf der Welle 19' sitzt, während der Hebel 18' mit der Welle verbunden ist, bei spielsweise durch einen Sicherungsquerstift 26. Durch die von den Drehfedern auf die beiden Hebel 17', 18' ausgeübte Federkraft sind diese über die nockenartigen Vorsprünge 20, 21 kraftschlüssig aneinander geführt, wobei eine ASR-Funktion dann ausgeführt werden kann, wenn am Hebel 18' eine Kraft zur Einwirkung gelangt, so daß die Drosselklappe stärker geschlossen werden kann, als nach der Einwirkung des Fahrers auf das Fahrpedal 7 und dementsprechend den Hebel 17' zu erwarten ist.

Hierzu ist ein geeigneter motorischer Drehantrieb, also Motor 27, vorzugsweise mit Untersetzungsgetriebe vorgesehen, der über eine Kupplung 28 auf die Welle 19' und damit auf den Hebel 18' wirkt. Die Kupplung 28 wird hier mit Vorteil eingesetzt, um bei normaler Drosselklappenbewegung über das Fahrpedal den Motor 27 mit Getriebe nicht mitbewegen zu müssen.

Grundsätzlich gilt, daß die Auslegung der Federcharakteristiken für die Drehfedern 3'' und 2'' wie auch die Zugfedern 3' und 2' (bezogen auf den Weg am Hebelende) wie die weiter vorn schon erläuterten Federcharakteristiken des Linearstellers zu treffen ist.

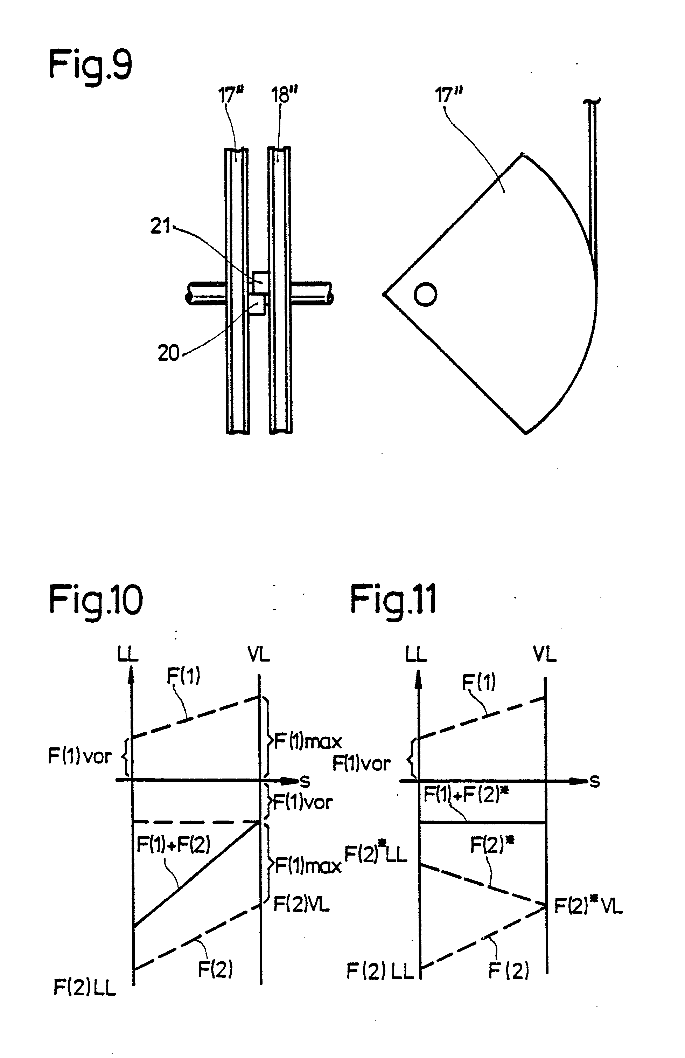

Erfolgt die Drosselklappenbetätigung bei bestimmten Fahrzeugen über Seilzüge oder sind Seilzüge jedenfalls im Bereich einer bestimmten Übertragungsstrecke eingesetzt, dann können anstelle der Hebel auch Kurvenscheiben $17''$, $18''$, vorzugsweise in der in Fig. 9 rechts dargestellten Form als Kreissegmentausschnitte Verwendung finden, wodurch es auch mit Vorteil möglich ist, eine gleichmäßige Übersetzung vorzunehmen, falls gewünscht.

Bei einer durch die vorliegende Erfindung geschaffenen Entkopplungsmöglichkeit zwischen Fahrpedalbetätigung und der Drosselklappenbewegung mit Hilfe von zwei gegensinnig auf die Trennstelle einwirkenden Federn, nämlich einer Öffnungsfeder und einer Schließfeder, kann ein weiterer Gesichtspunkt Bedeutung haben, der darin besteht, daß zum Öffnen der Drosselklappe insgesamt eine sogenannte weiche Summen-Federkennlinie gewünscht ist.

Grundsätzlich gilt, daß die Öffnungsfeder 2, $2'$, $2''$ im entspannten Zustand, also bei voll durchgetretenem Fahrpedal 7 und entsprechend Vollaststellung VL des Fahrzeugs eine größere Kraft F(2)-VL besitzen muß als die Drosselklappen-Rückstellfeder 1 im in der Vollaststellung dann gespannten Zustand; diese Kraft ist mit F(1)max bezeichnet, d.h. die Anpreßkraft darf nicht Null werden.

Darüber hinaus soll die Summenkennlinie von Öffnungsfeder 2 und Drosselklappenfeder 1 (bei den folgenden Ausführungen werden diese Federn lediglich noch mit ihrem einfachen Bezugszeichen bezeichnet, ohne Beistriche, da die getroffenen Feststellungen für alle Federarten in den Ausführungsbeispielen der Figuren 1, 7 und 8 Gültigkeit haben) bei Vollast VL noch eine Vorspannung besitzen, die in der Größenordnung der Vorspannung der Drosselklappenfeder im entspannten Zustand, also bezogen auf die entsprechende Funktion der Brennkraftmaschine im Leerlauf LL, liegt. Diese Drosselklappenfeder-Vorspannung (entspannter Zustand für Leerlauf LL) ist im folgenden mit F(1)vor bezeichnet.

Hieraus ergibt sich die Vorspannkraft F(2) der Feder 2, die bei Vollast VL (also entspanntem Zustand dieser Feder) erreicht wird, zu F(2)VL ≈ F(1)vor + F(1)max.

Diese Verhältnisse sind in Form eines Diagramms für die Anpreßkraft in Fig. 10 gezeigt, wobei an den Federkennlinien die einzelnen Federkräfte angegeben sind und die jeweiligen Extrempositionen ebenfalls dargestellt sind, die die Federn einnehmen können, also Leerlauf LL (Drosselklappe geschlossen) und Vollast VL (Drosselklappe voll geöffnet), was andererseits bedeutet, daß sich im Zustand LL die Drosselklappenrückstellfeder 1 in ihrem insofern maximal gespannten Zustand befindet. Da die Kräfte der Federn 1 und 2 entgegengesetzt wirken, ist der Kennlinienverlauf der Feder 2 im Diagramm der Fig. 10 und in den folgenden Diagrammen im negativen Bereich angeordnet, wobei die entwickelte Federkraft von der entspannten Position bei VL negativ größer wird bis zur Position LL.

Bei Hintereinanderschaltung der Drosselklappenfeder 1 und der Öffnungsfeder 2 erhält man, wie die Summenkennlinie F(1)+F(2) der beiden Federn im Diagramm der Fig. 10 erkennen läßt, eine unerwünschte Versteilerung oder "Aufsteilung" und im Endeffekt eine entsprechend "härtere" Feder, die über den Federweg die von ihr erbrachte Federkraft stark ändert.

Die Kraft der Feder 3, $3'$, $3''$ muß gegenüber dieser "Summenfeder" so ausgelegt sein, daß sie im entspannten Zustand (LL) die Kräfte der Federn 1 und 2 - die Anpreßkraft -übertrifft. Dadurch können unerwünscht hohe Pedalkräfte auftreten.

Mit einer Kraft, die Anpreßkraft, entsprechend der Summenkennlinie F(1)+F(2) der Federn 1 und 2 (und natürlich der Federn 1 und $2'$ sowie 1 und $2''$) sind die Hebel 17, 18, $17'$, $18'$ bzw. die Teile der Trennstelle des Linearstellers gegeneinander verspannt - und diese Kraft muß bei einem ASR-Eingriff überwunden werden. Es ist daher anzustreben, diese Kraft so klein wie möglich auszulegen, d.h. auf die überhaupt nötige Vorspannung zu reduzieren.

Entsprechend der Darstellung der Fig. 11 kann eine solche Reduzierung, also die Erzielung einer insofern weichen Summen-Federkennlinie dadurch realisiert werden, daß man eine gewünschte Summenkurve der Federkräfte F(1)+F(2) über den Federweg konstant gleich der Federkraft der Drosselklappenfeder 1 im entspannten Zustand macht, also gleich F(1) vor.

Dieser neue Verlauf der Summenkurve ist als F(1)+F(2)* dargestellt, und ein solches Verhalten läßt sich durch den Einsatz einer negativen Federkennlinie für die Öffnungsfeder F(2) erzielen, die daher im Diagrammverlauf der Fig. 11 mit F(2)* bezeichnet ist. Eine solche negative Federkennlinie kann erreicht werden durch beispielsweise:

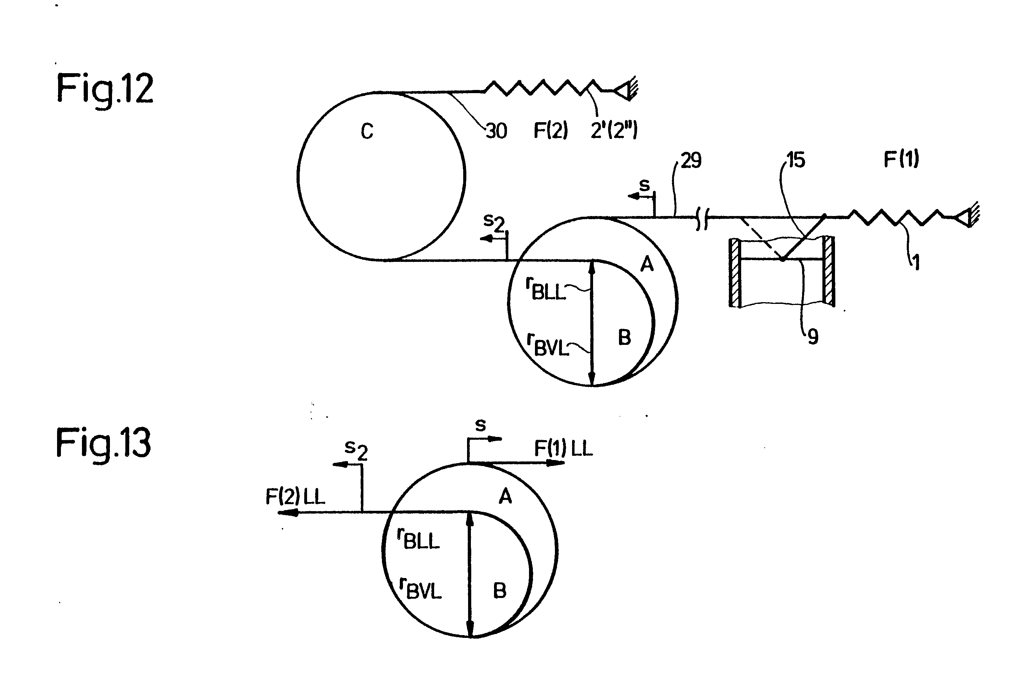

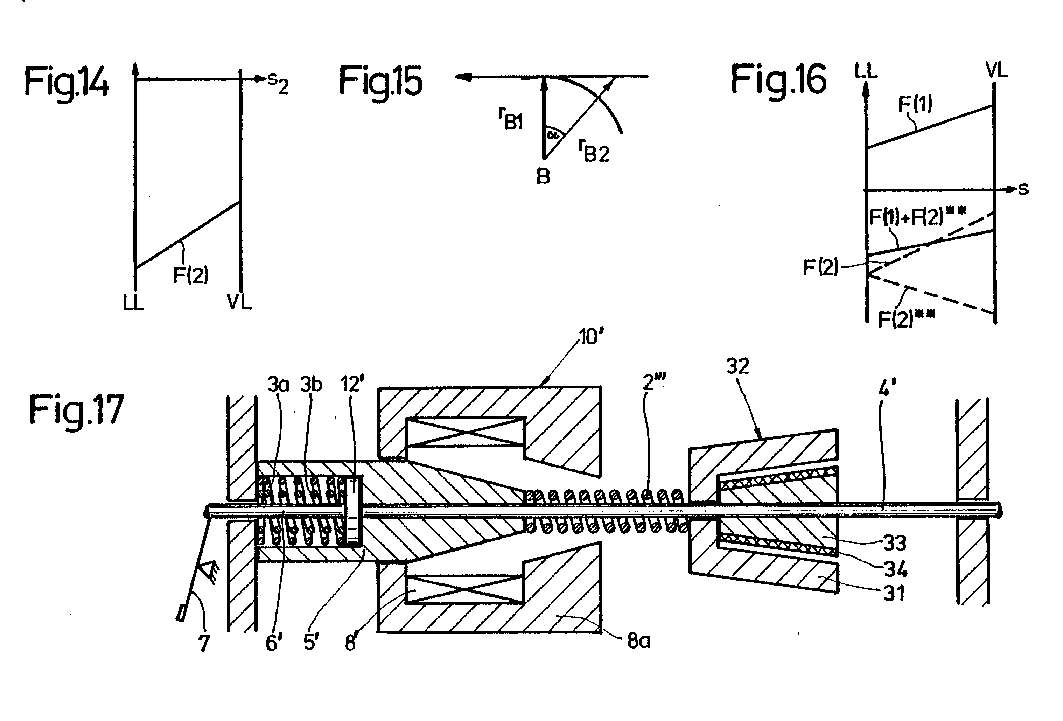

a) bei dem Drehsteller durch Verwendung einer Kurvenscheibe mit sich änderndem Radius, wie dies in Fig. 12 gezeigt ist, oder durch einen Schwenkmagneten und bei

b) dem Ausführungsbeispiel eines Linearstellers durch den Einsatz eines (weiteren) Magneten, wie dies in Fig. 17 im einzelnen dargestellt ist. Hierauf wird weiter unten noch eingegangen.

Zur Realisierung einer solchen negativen Federkennlinie mit einer Kurvenscheibe, wobei, worauf gleich eingegangen werden kann, eine normale Öffnungsfeder 2 als Zugfeder mit vom entspannten zum gespannten Zustand ansteigender Federkraft eingesetzt werden kann, wird entsprechend dem Ausführungsbeispiel der Fig. 12 vorgegangen. Hierbei kann die (kreisförmige) Scheibe A dem Hebel 18' bzw. besser noch der Scheibe 18" bzw. dem entsprechenden Scheibensegment entsprechen, über welches das dann in diesem Fall vorgesehene Zugseil 29 zur Drosselklappenbetätigung geführt ist. Fest mit der Scheibe A verbunden ist eine Kurvenscheibe B mit sich von Leerlauf auf Vollast änderndem kleinerem Radius $r_{BLL}$ auf größeren Radius $r_{BVL}$. An der Kurvenscheibe greift dann die Kraft F(2) der Öffnungsfeder 2 an, bei dem dargestellten Ausführungsbeispiel über eine weitere Scheibe C, die jedoch auch entbehrlich ist, da sie lediglich der Kraftumlenkung dient.

Es wird von folgendem ausgegangen. Bei vorgegebenem Kennlinienverlauf F(1) über den Federweg der Drosselklappenfeder 1 mit der anfänglichen Vorspannungskraft (im entspannten Zustand) F(1)vor soll die gewünschte Summenkennlinie F(1)-+F(2)* betragsmäßig über dem Weg gleich sein der Vorspannungskraft F(1)vor, wie dies in Fig. 11 in Diagrammform dargestellt ist.

Demnach muß die gesuchte Öffnungsfeder 2 einen negativen Kennlinienverlauf F(2)*aufweisen, damit bei der Summenbildung der Kennlinien der Konstantverlauf erzielt wird. Eine reale Feder ist jedoch nur mit der im Diagramm der Fig. 11 ebenfalls dargestellten Kennlinie entsprechend F(2) verfügbar.

Durch die in Fig. 12 gezeigte Anordnung läßt sich jedoch die Summe der Momente, die auf die Scheibe A wirken, konstant halten, indem die Federkraft F(2) der Öffnungsfeder 2 (zunächst über ein Zugseil 30 und unter Umschlingung der Scheibe C) auf die Kurvenscheibe B übertragen wird.

Auf die Scheibe A wirkt in Abhängigkeit des Weges s die Kraft F(1) der Feder 1, auf die Kurvenscheibe B beim Weg s2 die Kraft F(2) der Feder 2. Für die Leerlaufstellung sind diese Kräfte in Fig. 13 aufgetragen.

Demnach wirkt auf die Scheibe A im Abstand $r_A$ die Kraft F(1)LL; auf die Scheibe B im Abstand $r_{BLL}$ (Radius der Kurvenscheibe B bei Leerlauf) die Kraft F(2)LL.

Bei konstantem Radius $r_A$ soll von der Scheibe A die konstante Kraft F(1)+F(2) übertragen werden, d.h. das Moment an der Scheibe A soll konstant gleich dem Moment M(A) sein. Es muß also gelten:

$$M(A) = F(2) \cdot r_B - F(1) \cdot r_A$$

Für den Leerlauf gilt z.B.

$$M(A) = F(2)LL \cdot r_{BLL} - F(1)LL \cdot r_A$$

und für Vollast gilt

$$M(A) = F(2)VL \cdot r_{BVL} - F(1)VL \cdot r_A$$

Daher ist es möglich, daß die von der Feder 2 über dem Weg s2 zu liefernde Kraft F(2) den in Fig. 14 gezeigten Verlauf aufweist, d.h., es gelingt mit der Kurvenscheiben-Konfiguration der Fig. 12, eine reale Zugfeder mit dem Kennlinienverlauf Federkraft über dem Federweg entsprechend F(2) einzusetzen und durch die über die Kurvenscheibe umgewandelte, hieraus erzeugte negative Federkennlinie eine insgesamt und in der gewünschten Weise weiche Summenfederkennlinie zu realisieren.

Die Federraten oder -kennlinienverläufe der Drosselklappenfeder 1 und der Öffnungsfeder 2, die sich in der aufgezeigten Weise auf die miteinander verbundenen Scheiben A und B auswirken, so daß das Moment an diesen Scheiben insgesamt konstant ist, können nicht beliebig groß werden; anders ausgedrückt, bei gegebenen Federraten F-(1) und F(2) der Federn 1 und 2 läßt sich das Moment M(A) an den Scheiben A und B durch Änderung des Radius $r_B$ nur in bestimmten Grenzen beeinflussen, weil der Radius $r_B$ nicht beliebig geändert werden kann. Wird der Radius in einem kleinen Winkelbereich $\alpha$ von $r_{B1}$ auf $r_{B2}$ geändert, wie dies in Fig. 15 dargestellt ist, dann muß der Radius $r_{B2}$ "unterhalb" der Tangente des Zugseiles liegen, also $r_{B2} < r_{B1}/\cos(\alpha)$.

Durch den Einsatz der Kurvenscheibe ergibt sich daher die Möglichkeit, die Summenkraft der Drosselklappenfeder und der Öffnungsfeder so weit zu senken, daß die Kraft F(3) der auf der Fahrpedalseite angreifenden, ebenfalls in Richtung Schließen der Drosselklappe wirkenden Feder 3, 3', 3" kleiner als ohne Verwendung einer Kurvenscheibe dimensioniert werden kann. Hierzu kommt der Vorteil eines geringeren, vom Steller (Linearsteller oder Schwenksteller) für die Verstellung im ASR- bzw. MSR-Fall aufzubringenden Kraftaufwands.

Schließlich ist es auch möglich, eine weiche Summen-Federkennlinie bei Einsatz eines Linearstellers, wie er schematisch anhand der Darstellung der Fig. 1 weiter vorn beschrieben worden ist, dadurch zu erzielen, daß eine insofern auch hier erforderliche negative Federkennlinie durch Einsatz eines (zusätzlichen) Magneten realisiert wird.

Auch in diesem Fall muß die im Diagrammverlauf der Fig. 11 gezeichnete erforderliche angenommene Federkraft F(2)* durch Einsatz zusätzlicher Mittel sozusagen "umgesetzt" werden.

Im Gegensatz zu der vorher beschriebenen Manipulation der Kennlinie von Feder 2 mittels Kurvenscheibe wird hier eine magnetische Kraft mit negativer Charakteristik hinzugefügt. Wenn die Magnetkraft in Richtung Öffnen der Drosselklappe wirkt, dann kann eine schwächere Öffnungsfeder der Drosselklappe gewählt werden. Auf jeden Fall wird die gestrichelte Differenz zwischen den Kennlinienverläufen F(2) und F(2)* der Fig. 16 durch die wegabhängige Magnetkraft erbracht.

Der Linearsteller 10' der Fig. 17 umfaßt einen als magnetischen Rückschluß dienenden Stator 8a, der stationär gehalten ist und in seinem Inneren die Erregerspule 8' lagert. Der Anker 5' dieses elektromagnetischen Stellgliedes ist bei diesem Ausführungsbeispiel nicht als Permanentmagnet ausgebildet (im Gegensatz zu der bevorzugten Ausführungsform in der eher schematisierten Darstellung der Fig. 1); daher wird bei dem Linearsteller 10' der Fig. 17 die in gewünschter Weise linear vom Erregerstrom I im ASR-Fall abhängige Kraftzunahme durch eine spezielle Formgebung des Ankers 5' und des Stators 8a erreicht. Die kegelstumpfförmige Ausbildung des Ankers und die entsprechend komple mentäre Form im Stator, in die der Kegelstumpf des Ankers 5' eintaucht, sichert die lineare Kraftzunahme, wobei die in Öffnungsrichtung wirkende Öffnungsfeder 2''' wie beim Ausführungsbeispiel der Fig. 1 auf den Anker wirkt und sich am Permanentmagnet-Stator 31 des zusätzlichen magnetischen Kraftspeichers 32 abstützt. Der Federteller 12', der gegen den Anker 5' und mit diesem die Trennstelle bildet, sitzt in einer Bohrung des Ankers und ist gelagert von der Zugstange 6', die über ein entsprechendes Gestänge oder direkt am Fahrpedal 7 angelenkt ist. Es sind bei diesem Ausführungsbeispiel zwei unabhängige Federn 3a, 3b zum Schließen der Drosselklappe vorgesehen.

Die zur Drosselklappe weiterführende Zugstange 4' trägt an ihr befestigt einen Permanentmagnetanker 33, der einen aufgebrachten Permanentmagneten 34 lagert. Die Zugstange 4' ist nichtmagnetisch; der magnetische Rückschluß erfolgt über den schon erwähnten feststehenden PermanentmagnetStator 31.

Erkennbar ist die von dem magnetischen Kraftspeicher aufgebrachte und auf die Zugstange 4' und damit letztlich auf die Drosselklappe übertragene Kraftwirkung dann maximal, wenn der Anker 33 vollständig in den Stator 31 eingetaucht ist, also bei Vollast, während sie immer geringer wird, je mehr der Anker 33 aus dem Statorbereich austritt, d.h. je mehr sich die Drosselklappe in die Schließstellung bewegt. Diese Charakteristik ist im Verlauf umgekehrt bzw. entgegenwirkend zu der Charakteristik der Öffnungsfeder 2''', deren Federkraft mit zunehmender Bewegung der Zugstange 4' in der Zeichenebene der Fig. 17 nach rechts zunimmt, da die Feder stärker zusammengepreßt wird. Es ergibt sich dann ein entspre chender Summen-Federkennlinienverlauf, wie in Fig. 16 eingezeichnet, wobei, wie erwähnt, die Öffnungsfeder 2'' in - schwächerer Ausführung gewählt werden kann, so daß die von dem magnetischen Kraftspeicher eingebrachte Charakteristik überwiegt. In Fig. 16 ist die von dem magnetischen Kraftspeicher über dem Federweg, also zwischen LL und VL aufgebrachte Kraft in ihrem Verlauf schraffiert angegeben.

Der magnetische Kraft-Weg-Verlauf wird so gewählt, daß die Summenkraft $F(1) + F(2)'''$ bei LL deutlich größer ist als bei VL, damit eine stabile Ansteuerung der Drosselklappe bei ASR-Betrieb möglich ist.

Die Position der in Fig. 17 gezeigten Komponenten ist in der Vollaststellung VL dargestellt.

Alle in der Beschreibung, den nachfolgenden Ansprüchen und der Zeichnung dargestellten Merkmale können sowohl einzeln als auch in beliebiger Kombination miteinander erfindungswesentlich sein.

## Ansprüche

1. Vorrichtung zur Betätigung der Drosselklappe einer Brennkraftmaschine, mit Mitteln zu ihrer vom Willen der Betätigungsperson unabhängigen Verstellung, insbesondere zur Antriebsschlupfregelung (ASR) und/oder zur Motorschleppmomentregelung (MSR) bei einem von der Brennkraftmaschine angetriebenen Kraftfahrzeug, dadurch gekennzeichnet, daß im Verlauf des Übertragungswegs des Fahrpedals (7) eine die Verbindung zur Drosselklappe (9) unterbrechende Trennstelle (12/5; 17/18; 17'/18') angeordnet und beidseitig auf die Trennstelle einwirkende Federkräfte (F-(1); F(2); F(3)) so bemessen sind, daß die Trennstelle im Normalfall der Fahrpedalbetätigung geschlossen ist und daß zwischen Trennstelle (12/5; 17/18; 17'/18') und Drosselklappe (9) ein elektromagnetisches oder elektromotorisches Betätigungsglied (10, 10') angeordnet ist, welches eine Drosselklappenbewegung aufgrund des Auftretens von ASR- und/oder MSR-Signalen unabhängig von bzw. entgegen der Fahrpedalstellung einleitet und aufrechterhält.

2. Vorrichtung nach Anspruch 1, dadurch gekennzeichnet, daß das Betätigungsglied (10) ein elektromagnetischer Linearsteller ist.

3. Vorrichtung nach Anspruch 2, dadurch gekennzeichnet, daß der elektromagnetische Linearsteller einen im Feld einer Erregerspule (8) beweglich gelagerten Anker aufweist.

4. Vorrichtung nach Anspruch 3, dadurch gekennzeichnet, daß der Anker des elektromagnetischen Linearstellers ein Permanentmagnet (5) ist, der bei einer entsprechenden Änderung des Spulenstroms einen hierzu linearen Kraftanstieg oder Kraftabfall sichert.

5. Vorrichtung nach einem der Ansprüche 1-4, dadurch gekennzeichnet, daß die Trennstelle (12/5) angrenzend zum Linearsteller angeordnet ist und von dem als Anker wirkenden Permanentmagneten (5) und einem an diesem anliegenden Federteller (12) gebildet ist, der mindestens mittelbar mit der Fahrpedalbetätigung verbunden ist.

6. Vorrichtung nach Anspruch 5, dadurch gekennzeichnet, daß der Federteller (12) über ein Gestänge (Zugstange 6a) am Fahrpedal (7) angelenkt ist.

7. Vorrichtung nach einem der Ansprüche 1 bis 6, dadurch gekennzeichnet, daß der Permanentmagnet (5) innerhalb einer auf ihn eine Magnetkraft ($F_M$) ausübenden Spule (8) angeordnet ist, der ein je nach Verlauf der ASR- oder MSR-Funktion entsprechender Steuerstrom ($I_{ASR}$; $I_{MSR}$) von einem elektrischen oder elektronischen Steuergerät (16) zugeführt ist.

8. Vorrichtung nach Anspruch 7, dadurch gekennzeichnet, daß das Steuergerät (16) zur Erzeugung des der Drosselklappenstellung bei abgelöstem Permanentmagneten (5) entsprechenden Spulenstroms Radsensorsignale (SR), Drehzahl- und Fahrgeschwindigkeitssignale (nv) sowie Fahrpedal- und Bremspedal-Stellungssignale ($S_{FP}$; $S_{BP}$) verarbeitet und eine digitale oder analoge Logikschaltung oder ein programmgesteuerter Rechner ist.

9. Vorrichtung nach einem der Ansprüche 1 bis 8, dadurch gekennzeichnet, daß eine Drosselklappen-Rückstellfeder (1) vorgesehen ist, zur Zurückführung der Drosselklappe (9) in die Leerlaufposition, sowie eine Druckfeder (2), die sich ebenfalls von der Trennstelle (12/5) gesehen drosselklappenseitig befindet und so ausgebildet ist, daß entgegen der Drosselklappen-Rückstellfeder (1) ein Druck auf den Permanentmagneten (5) in Richtung auf seine Gegenkomponente (Federteller 12 des Fahrpedalgestänges) ausgeübt ist, und daß schließlich eine dem Fahrpedalgestänge (7, 6a, 6, 12) zugeordnete Fahrpedal-Rückführfeder (3) vorgesehen ist und daß die jeweiligen, von den Federn (3, 2, 1) erzeugten Federkräfte (F(3); F(2); F(1)) so gemessen und gegeneinander ausgewogen sind, daß für die Realisierung der ASR-Funktion die über den Steuerstrom ($I_{ASR}$) von der Spule erzeugte Magnetkraft ($F_M$) größer als die von der Drosselklappenstellung abhängende Summe der Federkräfte (F(2) und F(1)) der Drosselklappen-Rückstellfeder (1) und der Druckfeder (2) ist, während bei Realisierung einer MSR-Funktion die in Gegenrichtung zu erzeugende Magnetkraft (- $F_M$) größer als die Summenkennlinie der beteiligten Federn (1, 2, 3) ist.

10. Vorrichtung nach einem oder mehreren der Ansprüche 1 bis 9, dadurch gekennzeichnet, daß das Betätigungsglied ein rotatorischer Steller ist.

11. Vorrichtung nach Anspruch 10, dadurch gekennzeichnet, daß der rotatorische Steller gebildet ist aus zwei angrenzend zueinander angeordnete und über nockenartige Vorsprünge (20, 21) in eine Drehrichtung formschlüssig verbundene Hebel (17, 18; 17', 18') oder Kurvenscheiben (17", 18"), wobei die Drehbewegung eines der Hebel oder Kurvenscheiben vom Fahrpedal bzw. dessen Gestänge und die Drehbewegung des anderen Hebels entweder im Normalbetrieb vom Fahrpedal betätigten Hebel oder im ASR-Fall unter Ablösung von diesem Hebel durch Einwirkung des rotatorischen Stellers erfolgt.

12. Vorrichtung nach Anspruch 10 oder 11, dadurch gekennzeichnet, daß die beiden Hebel oder Kurvenscheiben gemeinsam auf einer Welle sitzen, daß der in seiner Drehposition vom Fahrpedal bestimmte Hebel lose und der mit der Drosselklappe über Gestänge oder Seilzug verbundene Hebel fest auf der Welle (19') angeordnet ist, und daß die Welle über eine im ASR- oder MSR-Fall aktivierte Kupplung (28) mit einem elektrischen Antriebsmotor (27), gegebenenfalls über ein Getriebe, verbunden ist.

13. Vorrichtung nach einem der Ansprüche 10 bis 12, dadurch gekennzeichnet, daß die in Schließrichtung der Drosselklappe wirkende, der Fahrpedalseite zugeordnete Schließfeder (3', 3") und die in Richtung Öffnen der Drosselklappe wirkende Öffnungsfeder (2', 2") als Zugfedern an den Hebeln (17, 18) angreifen oder als Drehfedern auf der gemeinsamen Welle (19') sitzen und bei ortsfester Abstützung ebenfalls an den Hebeln (17', 18') angreifen.

14. Vorrichtung nach einem der Ansprüche 1 bis 13, dadurch gekennzeichnet, daß zur Erzielung einer weichen Summen-Federkennlinie der Drosselklappenfeder (1) und der Öffnungsfeder (2, 2', 2". 2''') letzterer ein negatives Feder-Kennlinienverhalten zugeordnet ist.

15. Vorrichtung nach Anspruch 14, dadurch gekennzeichnet, daß zur Erzielung eines negativen Federkennlinienverhaltens der Öffnungsfeder (2', 2") eine ihren Radius über dem Federweg verändernde Kurvenscheibe (B) zugeordnet ist, die das auf sie von der Öffnungsfeder (2', 2") ausgeübte Moment auf eine mit ihr drehfest verbundene Scheibe (A) mit konstantem oder veränderlichem Radius überträgt, die über eine Betätigungsanordnung (Seilzug 29) mit der Drosselklappenbetätigung verbunden ist.

16. Vorrichtung nach Anspruch 15, dadurch gekennzeichnet, daß die Öffnungsfeder (2', 2") mit der Kurvenscheibe (B) über eine über eine weitere Scheibe (C) umgelenkte Seilzugverbindung (30) verbunden ist.

17. Vorrichtung nach einem oder mehreren der Ansprüche 1-16, dadurch gekennzeichnet, daß zur Realisierung eines insgesamt negativen Federkennlinienverhaltens der in Öffnungsrichtung der Drosselklappe wirkenden Vorspannungselemente der Öffnungsfeder (2''') des Linearstellers (10') ein magnetischer Kraftspeicher (32) zugeordnet ist.

18. Vorrichtung nach Anspruch 17, dadurch gekennzeichnet, daß der magnetische Kraftspeicher einen Permanentmagnetstator (31) umfaßt, in welchem mit der Drosselklappen-Wegverstellung ein Permanentmagnetanker (33) mit auf diesem aufgebrachten Permanentmagneten (34) verschieblich angeordnet ist.

19. Vorrichtung nach Anspruch 18, dadurch gekennzeichnet, daß der Permanentmagnetstator (31) in der Vollaststellung (VL - Drosselklappe geöffnet) den Anker (33) voll aufnimmt derart, daß die vom magnetischen Kraftspeicher herrührende Kraft auf die Drosselklappenverstellung mit Überführung in die Leerlaufposition (LL -Drosselklappe geschlossen) zunehmend verringert ist.

20. Vorrichtung nach Anspruch 18 oder 19, dadurch gekennzeichnet, daß der Stator (31) des magnetischen Kraftspeichers (32) eine Kegelstumpfform aufweist und der zugeordnete Anker (33) eine entsprechend komplementäre Form hat.

21. Vorrichtung nach einem der Ansprüche 18 bis 20, dadurch gekennzeichnet, daß bei Ausbildung des Ankers (5, 5′) des Linearstellers (10, 10′) in permanentfreier Form sowohl Anker (5, 5′) als auch Permanentmagnetstator (8) eine solche Formgebung aufweisen, daß sich eine linear vom Erregerstrom (I) der Erregerspule (8, 8′) abhängige Kraftzunahme oder -abnahme ergibt.

# Fig.1

$\alpha_{DK,F}$

$s_{max}$

$F_M$

$\alpha_{DK,L}$

$s_{max}$

10

6  11    2  4

14    14a

7a

6a

3  12  5

8

13

15  9

7

$I_{ASR}$
$(-I_{MSR})$

1  $\alpha_{DKmax}$

# Fig.1a

$S_R$

n

v

$S_{FP}$    $S_{BP}$

EP 0 295 414 A2

# Fig.2

F(1)

s
s_max

# Fig.3

F(2)

s
s_max

# Fig.4

F(1)+F(2)

s
s_max

# Fig.5

F 3

s
s_max

# Fig.6

F(1)+F(2)+F(3)

s
s_max

Fig.8

Fig.7

EP 0 295 414 A2

# Fig.9

17″  18″

21

20

17″

# Fig.10

LL          VL

F(1)

F(1)vor { 

F(1)max

s

} F(1)vor

F(1)+F(2)

} F(1)max

F(2)VL

F(2)

F(2)LL

# Fig.11

LL          VL

F(1)

F(1)vor { 

s

F(1)+F(2)*

F(2)*

F(2)*LL

F(2)*VL

F(2)LL          F(2)

# Fig.12

C

30    F(2)    2'(2")

29    15    F(1)

s

$s_2$

$r_{BLL}$

A

$r_{BVL}$    B

9    1

# Fig.13

s

$s_2$    F(1) LL

F(2) LL

A

$r_{BLL}$

$r_{BVL}$    B

EP 0 295 414 A2

21 250

EP 0 295 414 A2

Fig.14

Fig.15

Fig.16

Fig.17